# FASCICULE DE BREVET EUROPEEN

(11) **EP 3 785 158 B1**
(45) Date de publication et mention de la délivrance du brevet: **19.01.2022**
(21) Numéro de dépôt: 19734128.2
(22) Date de dépôt: 24.04.2019
(51) Int. Cl.: G06F 21/55, G05B 19/418, H04L 29/06, G06F 21/31, G06F 21/62, H04L 9/00, H04L 29/08, H04W 4/38

(54) **SYSTEME DE SECURISATION DE PROCEDE CYBER-PHYSIQUE**
SYSTEM ZUR SICHERUNG EINES CYBER-PHYSIKALISCHEN VERFAHRENS
SYSTEM FOR SECURING A CYBER-PHYSICAL METHOD

(30) Priorité: 25.04.2018 FR 1853618
(43) Date de publication de la demande: 03.03.2021
(73) Titulaire: Université Grenoble Alpes, 38400 Saint-Martin-d'Hères (FR)
(72) Inventeur: FLAUS, Jean-Marie, 38210 TULLINS (FR)
(74) Mandataire: Novagraaf Technologies
(86) Numéro de dépôt international: PCT/FR2019/050970
(87) Numéro de publication internationale: WO 2019/207251

(56) Documents cités:
- US-A1- 2014 137 257
- US-A1- 2017 359 366
- US-B1- 9 697 355

## Description

### Domaine

La présente demande concerne un système industriel comprenant une passerelle reliant un réseau de technologies d'exploitation et un réseau de technologies de l'information.

### Exposé de l'art antérieur

Un système industriel comprend généralement des machines et un réseau de technologies d'exploitation, également appelé réseau OT, comprenant notamment des systèmes de contrôle des machines reliés en réseau. Pour certaines applications, il est souhaitable de pouvoir intervenir à distance sur le réseau OT. Dans ce but, il est nécessaire de se connecter au réseau informatique de communication du système industriel. Ceci ouvre une brèche importante pour la sécurité du système industriel.

Il est connu d'utiliser une passerelle reliant le réseau OT à un réseau de technologies de l'information ou réseau IT, externe au système industriel et comprenant généralement un routeur muni d'un pare-feu. Un inconvénient d'une telle passerelle est que lorsqu'elle autorise un accès au réseau OT, elle donne un accès complet aux équipements du réseau OT dont les adresses ont été autorisées. Si le poste à distance du réseau IT a été corrompu, il peut alors être difficile d'empêcher qu'il ne réalise une action malveillante à l'encontre du réseau OT. Les documents US 2017/359366 et US 96977355 exposent des systèmes industriels pertinent adaptés pour la détection et l'évaluation d'attaques réalisées au niveau des appareils de terrain.

### Résumé

L'invention est définie dans la revendication indépendante 1.

Un objet d'un mode de réalisation est d'empêcher un accès direct d'un réseau IT, externe à un système industriel, aux équipements du réseau OT du système industriel.

Un autre objet d'un mode de réalisation est de réaliser un filtrage des paquets de données transitant entre le réseau IT et le réseau OT.

Un autre objet d'un mode de réalisation est de tracer les activités d'échange d'informations traversant la passerelle.

Un autre objet d'un mode de réalisation est de détecter les activités d'échange d'informations traversant la passerelle.

Ainsi, un mode de réalisation prévoit un système industriel comprenant des machines, des systèmes de commande des machines reliés par un premier réseau de communication et une passerelle destinée à relier le premier réseau de communication à un deuxième réseau de communication, la passerelle comprenant une mémoire et comprenant un processeur configuré pour copier dans la mémoire des premières données transmises sur le deuxième réseau de communication et relatives au fonctionnement des machines, comprenant en ouvre un analyseur configuré pour :
- collecter des valeurs de variables relatives au fonctionnement des machines (14),
- déterminer, pour au moins certaines des variables, des plages de valeurs à partir d'au moins un premier modèle de fonctionnement des machines,
- détecter au moins une anomalie, si la valeur d'au moins une variable est en dehors de la plage de valeurs de ladite variable, ladite anomalie possédant une vraisemblance,
- détecter, à partir de la au moins une anomalie, au moins un événement indésirable, auquel est attribué un impact sur le système industriel, ledit impact possédant une gravité,
- déterminer, pour chaque impact attribué à chacun des au moins un événement indésirable, une vraisemblance, à partir d'une combinaison de vraisemblances de la au moins une anomalie détectée,
- fournir, pour chaque impact et son couple gravité-vraisemblance, une valeur numérique,
- déterminer un niveau de risque global du système industriel à partir des valeurs numériques obtenues des impacts des au moins un événement indésirable détecté.

Selon un mode de réalisation, les premières données sont fournies par les systèmes de commande.

Selon un mode de réalisation, le processeur est configuré pour écrire dans la mémoire des deuxièmes données fournies par un poste relié au deuxième réseau de communication.

Selon un mode de réalisation, le processeur est configuré pour transmettre à au moins l'un des systèmes de commande les deuxièmes données écrites dans la mémoire.

Selon un mode de réalisation, le processeur est configuré pour réaliser une authentification d'un utilisateur dudit poste mettant en oeuvre deux procédés d'identification distincts.

Selon un mode de réalisation, l'analyseur est configuré pour émettre une alerte si au moins une première anomalie est détectée et si des premières conditions sont remplies.

Selon un mode de réalisation, le système comprend au moins un capteur réseau configuré pour faire une recopie de troisièmes données circulant sur le premier réseau de communication et relié à l'analyseur.

Selon un mode de réalisation, l'analyseur est configuré pour déterminer, pour chaque plage de valeurs d'une variable, un coefficient de crédibilité et pour ne pas tenir compte d'une première anomalie relative à une variable dont le coefficient de crédibilité de la plage de valeurs associée est en dessous d'un seuil.

Selon un mode de réalisation, l'analyseur est configuré pour recevoir les troisièmes données, pour classer les troisièmes données selon au moins des première et deuxième catégories, et pour déterminer au moins le premier modèle à partir des troisièmes données de la première catégorie et un deuxième modèle à partir des troisièmes données de la deuxième catégorie.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon partielle et schématique, un mode de réalisation d'un système industriel relié à un réseau IT ;
la figure 2 représente, sous la forme d'un schéma-bloc, un mode de réalisation d'une passerelle du système industriel de la figure 1 ;
la figure 3 représente, sous la forme d'un schéma-bloc, un mode de réalisation d'un procédé d'identification mis en oeuvre par la passerelle du système industriel de la figure 1 ;
la figure 4 représente, sous la forme d'un schéma-bloc, un mode de réalisation d'un procédé de filtrage mis en oeuvre par la passerelle du système industriel de la figure 1 ;
la figure 5 représente, de façon partielle et schématique, un autre mode de réalisation d'un système industriel relié à un réseau IT ;
la figure 6 représente, sous la forme d'un schéma-bloc, un mode de réalisation d'un analyseur du système industriel de la figure 5 ;
la figure 7 représente, sous la forme d'un schéma-bloc, un mode de réalisation d'un procédé de détection d'intrusion mis en oeuvre par le système industriel de la figure 5 ;
la figure 8 représente, de façon partielle et schématique, un exemple d'un système industriel relié à un réseau IT ;
la figure 9 illustre un procédé de logique floue ;
la figure 10 représente un exemple de table de transition ;
la figure 11 représente un exemple d'arbre de défaillance utilisé lors de la mise en oeuvre du procédé de détection d'intrusion illustré en figure 7 ; et
les figures 12 et 13 sont des exemples d'arbres de défaillance utilisés lors de la mise en oeuvre du procédé de détection d'intrusion du système industriel représenté en figure 8.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés. En particulier, les protocoles de transmission de données sur un réseau informatique de communication sont bien connus de l'homme du métier et ne sont pas décrits en détail par la suite. Sauf précision contraire, les expressions "approximativement", "sensiblement", "environ" et "de l'ordre de" signifient à 10 % près, de préférence à 5 % près.

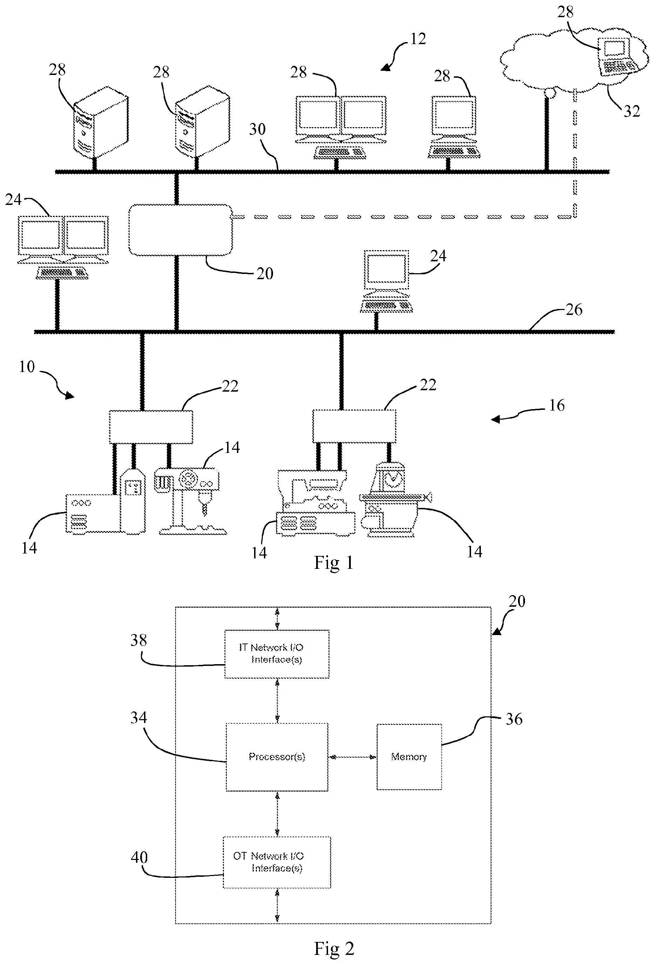

La figure 1 représente, de façon partielle et schématique, un mode de réalisation d'un système industriel 10 relié à un réseau IT 12. Le système industriel 10 comprend :
des machines 14 ;
un réseau OT 16 qui comprend l'ensemble du matériel et des logiciels qui permettent la surveillance et/ou le contrôle directs des machines 14 ; et
une passerelle 20 permettant notamment l'échange de données entre le réseau OT 16 et le réseau IT 12.

Le réseau OT 16 comprend notamment, pour chaque machine 14, un système de pilotage 22 de la machine 14, également appelé contrôleur, par exemple un automate programmable industriel ou PLC (sigle anglais pour Programmable Logic Controller). Chaque machine 14 peut comprendre des capteurs, des actionneurs, des éléments de chauffage, etc. Le contrôleur 22 est notamment configuré pour fournir, à partir de signaux de commandes numériques, des signaux analogiques pour la commande de la machine 14. Le contrôleur 22 est notamment configuré pour fournir, à partir de signaux mesurés par les capteurs de la machine 14, des signaux de mesure adaptés au réseau OT 16. Le réseau OT 16 peut comprendre d'autres systèmes informatiques 24 reliés aux contrôleurs 22 par l'intermédiaire d'un réseau de communication 26. Les systèmes informatiques 24 permettent notamment de commander les machines 14 à distance au sein du système industriel 10. Le réseau OT 16 peut correspondre à un système d'acquisition et de contrôle de données, également appelé SCADA (sigle anglais pour Supervisory Control And Data Acquisition) qui est un système de télégestion permettant de traiter en temps réel des télémesures et de contrôler à distance les machines 14. Par la suite, on appelle équipement du réseau OT 16 indifféremment un contrôleur 22 ou un système informatique 24 du réseau OT 16.

Le réseau IT 12 comprend des ordinateurs 28, également appelés postes, reliés entre eux par un réseau de communication 30 et reliés à la passerelle 20. En particulier, des ordinateurs 28 peuvent être reliés à la passerelle 20 via internet 32.

La figure 2 est un schéma-bloc d'un mode de réalisation de la passerelle 20. La passerelle 20 peut comprendre un ou plusieurs processeurs 34 (Processor(s)) et un ou plusieurs supports de stockage non transitoire lisibles par un processeur (par exemple, la mémoire 36 (Memory)), notamment choisis dans le groupe comprenant RAM, ROM, EEPROM, mémoire flash ou une autre technologie de mémoire, CD-ROM, disque numérique polyvalent (DVD) ou un autre support à disque optique, cassette magnétique, bande magnétique, disque de stockage magnétique ou un autre dispositif de stockage magnétique, ou un autre support de stockage non transitoire lisible par ordinateur. La mémoire 36 peut stocker des instructions de programme informatique qui, lorsqu'elles sont exécutées, mettent en oeuvre les étapes de procédés décrits par la suite. Le processeur ou les processeurs 34 peuvent être couplés à la mémoire 36 et peuvent exécuter ces instructions de programme d'ordinateur pour entraîner la réalisation de ces étapes. La passerelle 20 peut en outre comprendre une première interface 38 d'entrée/sortie de réseau (IT Network I/O Interface(s)) par laquelle la passerelle 20 peut communiquer avec le réseau OT 16 et une deuxième interface 40 d'entrée/sortie de réseau (OT Network I/O Interface(s)) par laquelle la passerelle 20 peut communiquer avec le réseau IT 12.

La passerelle 20 permet l'échange de données entre le réseau IT 12 et le réseau OT 16. Dans la suite de la description, on appelle accès au réseau OT 16 à distance par un utilisateur la transmission de commandes par l'utilisateur depuis un poste 28 du réseau IT 12 destinées à un équipement du réseau OT 16, par exemple un contrôleur 22, via la passerelle 20.

Pour permettre à un utilisateur d'accéder au réseau OT 16, la passerelle 20 est configurée pour réaliser une authentification de l'utilisateur qui demande à échanger des données avec le réseau OT 16.

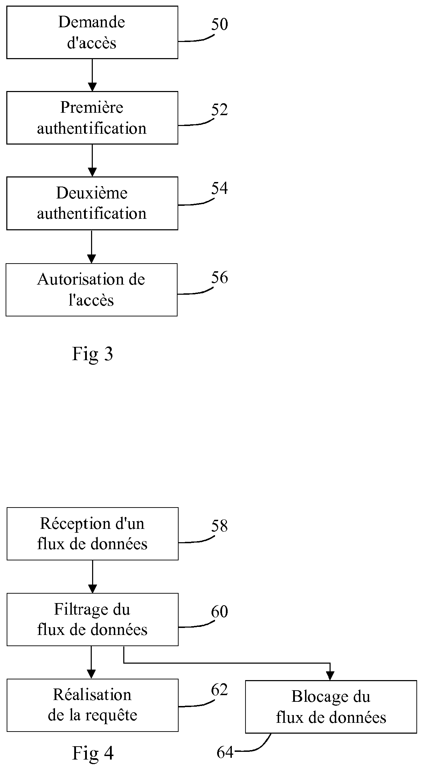

La figure 3 représente, sous la forme d'un schéma-bloc, un mode de réalisation d'un procédé d'authentification mis en oeuvre par la passerelle 20 du système industriel 10 représenté en figure 1.

A l'étape 50, la passerelle 20 reçoit une requête d'accès d'un utilisateur depuis un poste 28 du réseau IT 12. Le procédé se poursuit à l'étape 52.

A l'étape 52, la passerelle 20 détermine si l'utilisateur est autorisé à accéder au réseau OT 16 en utilisant un premier critère d'authentification de l'utilisateur. Si le premier critère est satisfait, le procédé se poursuit à l'étape 54. Si le premier critère n'est pas satisfait, la passerelle 20 bloque l'accès du réseau OT 16 au poste 28.

A l'étape 54, la passerelle 20 utilise un deuxième critère d'authentification de l'utilisateur différent du premier critère. Si le deuxième critère est satisfait, le procédé se poursuit à l'étape 56. Si le deuxième critère n'est pas satisfait, la passerelle 20 bloque l'accès du réseau OT 16 au poste 28.

A titre d'exemple, les premier et deuxième critères d'authentification peuvent être choisis dans le groupe comprenant :
la transmission par le poste 28 d'un identifiant et/ou d'un mot de passe et la comparaison par la passerelle 20 de l'identifiant et/ou du mot de passe avec une liste d'identifiants et/ou de mots de passe autorisés stockés en mémoire ; et
la demande par l'utilisateur d'un code à un organisme de confiance relié au réseau IT 12, la transmission du code par l'organisme de confiance à l'utilisateur et la transmission par l'utilisateur du code à la passerelle 20 par le poste 28.

A l'étape 56, la passerelle 20 autorise la transmission de données par l'utilisateur depuis le poste 28 à destination du réseau OT 16, par exemple à destination de l'un des contrôleurs 22. Selon un mode de réalisation, l'accès peut n'être autorisé par la passerelle 20 que vers certains des équipements du réseau OT 16. Selon un mode de réalisation, l'accès n'est autorisé que pour une durée prédéterminée, et, à l'étape 56, la passerelle 20 interrompt l'accès du poste 28 au réseau OT 16 à la fin de la durée prédéterminée.

Selon un mode de réalisation, à l'étape 56, après authentification, la passerelle 20 met en oeuvre un procédé de filtrage des requêtes fournies par l'utilisateur via le poste 28.

La figure 4 représente, sous la forme d'un schéma-bloc, un mode de réalisation d'un procédé de filtrage mis en oeuvre par la passerelle 20 du système industriel 10 représenté en figure 1.

A l'étape 58, le poste 28 fournit à la passerelle 20 un flux de données. Le procédé se poursuit à l'étape 60.

A l'étape 60, la passerelle 20 détermine si le flux de données est autorisé. Dans ce but, le processeur 34 de la passerelle 20 applique des règles pour autoriser ou bloquer le flux de données. Il peut s'agir de règles qui sont programmés dès l'origine dans la passerelle 20. Il peut s'agir en outre de règles qui sont transmises à la passerelle 20, par exemple de règles issues d'un procédé d'auto-apprentissage comme cela est décrit plus en détail par la suite.

Selon un mode de réalisation, le processeur 34 est configuré pour déterminer si le flux de données issu du poste 28 correspond à une requête qui fait partie d'une liste de requêtes autorisées. A titre d'exemple, les requêtes autorisées peuvent être les requêtes suivantes :
requête pour le démarrage d'une machine 14 ;
requête pour l'arrêt d'une machine 14 ;
requête de configuration d'un équipement 22, 24 du réseau OT 16, notamment de transmission d'un programme devant être exécuté par l'équipement ;
requête de lecture de données produites par l'un des équipements 22, 24 du réseau OT 16 lors du fonctionnement des machines 14, les données correspondant par exemple aux valeurs de variables, par exemple à des valeurs de température, de pression, de tension, de courant, etc., obtenues lors du fonctionnement de l'une des machines 14 ;
requête de fourniture de données à l'un des équipements 22, 24 du réseau OT 16, notamment de commandes de fonctionnement pour l'une des machines 14 ; et
requête de récupération d'informations de maintenance, par exemple indiquant la survenue d'alertes ou de défauts.

La liste des requêtes autorisées peut dépendre de l'utilisateur identifié par la passerelle 20.

Si le flux de données est autorisé, le procédé se poursuit à l'étape 62. Si le flux de données n'est pas autorisé, le procédé se poursuit à l'étape 64.

A l'étape 62, la passerelle 20 exécute une action qui dépend de la requête transmise. Le procédé retourne à l'étape 58 tant que l'accès au réseau OT 16 est autorisé pour le poste 28.

A l'étape 64, la passerelle 20 bloque le flux de données fourni par le poste 28.

Selon un mode de réalisation, même après une authentification réussi, le poste 28 du réseau IT 12 n'a pas un accès direct aux équipements 22, 24 du réseau OT 16 via la passerelle 20 pour lire directement des données stockées dans des mémoires de ces équipements 22, 24. Seule est autorisée la lecture de données stockées dans la mémoire 36 de la passerelle 20. Le processeur 34 de la passerelle 20 est configuré pour récupérer des données fournies par les équipements 22, 24 et à stocker les données récupérées dans la mémoire 36. Les données peuvent être stockées dans la mémoire 36 sous la forme d'une table de valeurs accessibles via le nom de l'équipement 22, 24 et d'un identifiant de la variable associée à la donnée stockée. Les données récupérées par la passerelle 20 sur le réseau OT 16 et stockées dans la mémoire 36 peuvent être mises à jour par la passerelle 20 par lecture périodique des données fournies par les équipements 22, 24 du réseau OT 16. De ce fait, lorsque le poste 28 transmet à la passerelle 20 une requête de lecture d'une donnée produite par l'un des équipements 22, 24 du réseau OT 16, et que cette requête est autorisée par la passerelle 20, le poste 28 lit la donnée recherchée dans la mémoire 36 de la passerelle 20. Ceci peut être réalisé à l'étape 62 décrite précédemment.

En outre, selon un mode de réalisation, le poste 28 n'a pas un accès direct aux équipements 22, 24 du réseau OT 16 via la passerelle 20 pour écrire directement des données dans des mémoires de ces équipements 22, 24. Seule est autorisée l'écriture de données stockées dans la mémoire 36 de la passerelle 20. De ce fait, lorsque le poste 28 du réseau IT 12 transmet à la passerelle 20 une requête de transmission d'une donnée à l'un des équipements 22, 24 du réseau OT 16, et que cette requête est autorisée par la passerelle 20, le poste 28 écrit la donnée considérée dans la mémoire 36 de la passerelle 20, par exemple à un emplacement accessible via le nom de l'équipement 22, 24 et d'un identifiant de la variable associée à la donnée à écrire. Le processeur 34 de la passerelle 20 est alors configuré pour lire la donnée écrite dans la mémoire 36 et à transmettre cette donnée à l'équipement 22, 24 du réseau OT 16 auquel cette donnée est destinée. Ceci peut être réalisé à l'étape 62 décrite précédemment.

Selon un mode de réalisation, la passerelle 20 est, en outre, configurée pour transmettre tout ou partie de la table de valeurs stockée de la mémoire 36 à un poste 28 du réseau IT 12. Le poste 28 peut interroger la table de valeurs selon un protocole standard du réseau IT 12, par exemple le protocole https permettant notamment la mise en oeuvre d'outils d'analyse, de consolidation ou de visualisation de données de la table de valeurs. Il peut en outre interroger la table de valeurs selon un protocole industriel mis en oeuvre sur le réseau OT 16. Un logiciel peut ainsi fonctionner sur le poste 28 comme s'il fonctionnait sur le réseau OT 16.

Selon un mode de réalisation, la passerelle 20 est en outre configurée pour réaliser un traçage des activités d'échange d'informations entre le réseau IT 12 et le réseau OT 16. Les données échangées entre le réseau IT 12 et le réseau OT 16 peuvent être archivées dans la mémoire 36 de la passerelle 20. Les données archivées peuvent, en outre, être classées par exemple selon le type de requêtes auxquelles ces données correspondent. Ceci peut être réalisé à l'étape 62 décrite précédemment.

Selon un mode de réalisation, la passerelle 20 est en outre configurée pour mettre en oeuvre un procédé de détection d'intrusion. La passerelle 20 peut analyser les flux de données échangés entre le réseau IT 12 et le réseau OT 16 et émettre une alerte en fonction du résultat de l'analyse. L'émission d'une alerte peut notamment comprendre la transmission d'un message d'alerte aux personnes en charge de l'installation. Différents niveaux d'alerte peuvent être prévus. Par exemple, des niveaux d'alerte faible, moyen et fort peuvent être prévus. Une alerte de niveau fort peut être émise, notamment à l'étape 64 décrite précédemment, lorsqu'un flux de données est bloqué par la passerelle 20, par exemple parce qu'il correspond à une requête jamais autorisée par la passerelle 20. Une alerte de niveau moyen peut être émise lorsque des tentatives d'accès infructueuses sont détectées, par une tentative de lecture de données non autorisées. Une alerte de niveau moyen peut en outre être émise, notamment à l'étape 64 décrite précédemment, lors de la transmission d'une requête non autorisée par la passerelle 20 pour l'utilisateur à l'origine de la requête, celle-ci étant alors bloquée par la passerelle 20. Une alerte de niveau faible peut être émise, notamment à l'étape 64 décrite précédemment, lors de la détection d'un comportement inhabituel d'un utilisateur même si la requête à laquelle correspond le flux de données est permise.

Pour certaines applications, il est souhaitable de détecter les éventuelles attaques malveillantes sur le système industriel 10. Pour un réseau IT 12, il existe des systèmes de détection d'intrusion ou IDS (sigle anglais pour Détection Intrusion System) adaptés à analyser le flux de données transitant sur le réseau de communication 30 du réseau IT 12 et/ou à analyser des données de fonctionnement des postes 28 pour détecter des évènements caractéristiques d'une activité malveillante. Deux approches peuvent être utilisées : l'approche comportementale (en anglais anomaly detection) et l'approche par signatures (en anglais misuse detection). Dans l'approche comportementale, une attaque est qualifiée par la mesure d'une déviation sensible du système surveillé par rapport à un comportement de référence, réputé sain et défini au préalable. Dans l'approche par signatures, le système de détection d'intrusion comprend une base de signatures qui modélisent les différentes attaques connues. L'analyse consiste à rechercher l'occurrence d'un motif caractéristique d'une attaque dans le flux de données reçu par le système de détection d'intrusion.

Une difficulté des procédés de détection d'intrusion connus selon les approches précédentes est de fournir le comportement de référence ou de construire une base de signatures adéquates. Lorsque le comportement de référence ou la base de signatures ne sont pas adaptés, ceci peut entraîner l'absence de détection d'intrusion ou entraîner des faux positifs, c'est-à-dire la détection d'une intrusion alors qu'il n'y a pas de tentative d'intrusion. Les systèmes de détection d'intrusion connus n'ont pas une fiabilité suffisante pour une utilisation dans un système industriel.

Un objet d'un mode de réalisation est que le système de détection d'intrusion soit adapté à un système industriel.

Un objet d'un mode de réalisation est que la fiabilité du système de détection d'intrusion soit améliorée.

Un autre objet d'un mode de réalisation est de déterminer l'importance d'une intrusion détectée par le système de détection d'intrusion en fonction de son impact potentiel sur le système industriel.

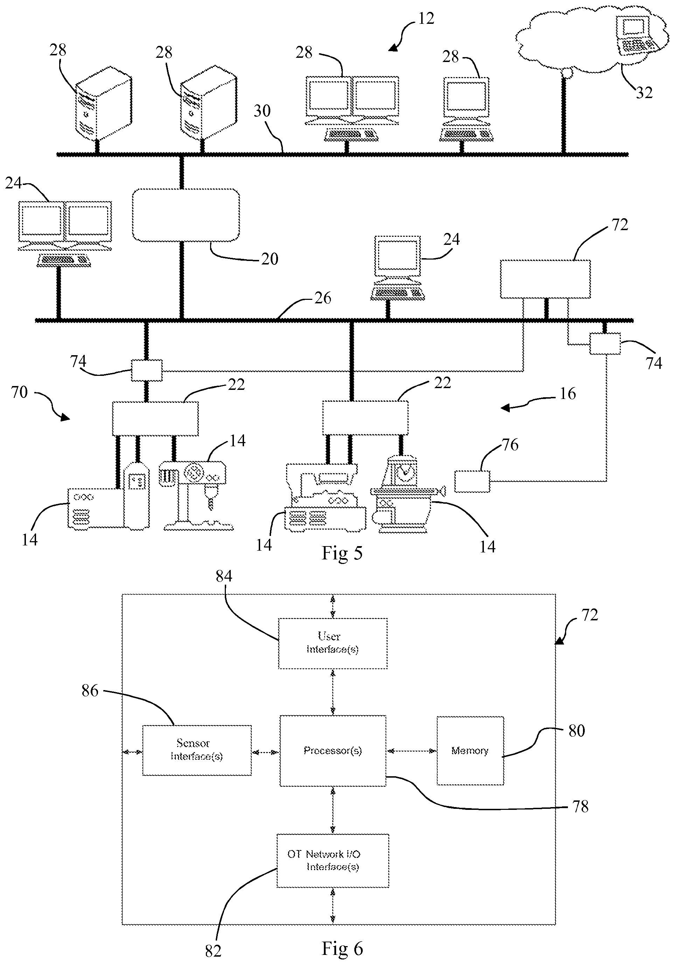

La figure 5 représente, de façon partielle et schématique, un autre mode de réalisation d'un système industriel 70. Le système industriel 70 comprend l'ensemble des éléments du système industriel 10 représenté en figure 1 dans lequel le réseau OT 16 comprend en outre un module de traitement 72, appelé analyseur dans la suite de la description. L'analyseur 72 est relié au réseau de communication 26.

Selon un mode de réalisation, le réseau OT 16 comprend, en outre, au moins un capteur réseau 74, également appelé sonde réseau, relié à l'analyseur 72, et de préférence au moins deux capteurs réseau 74 reliés à l'analyseur 72. Chaque capteur réseau 74 est configuré pour copier le flux de données passant en un point du réseau de communication 26 du réseau OT 16, éventuellement à réaliser un prétraitement du flux de données copié et à transmettre le flux de données copié et éventuellement prétraité à l'analyseur 72. Le capteur réseau 74 peut être prévu au niveau d'un commutateur réseau réalisant une recopie ou au niveau d'un TAP réseau. Selon un mode de réalisation, chaque capteur réseau 74 élabore des métadonnées qui sont transmises à l'analyseur 72.

Selon un mode de réalisation, le réseau OT 16 comprend, en outre, au moins un capteur machine 76. Le capteur machine 76 est associé à une machine 14 et est configuré pour transformer l'état d'une grandeur physique observée, par exemple la température, la pression, etc., susceptible de varier lors du fonctionnement de la machine 14 en un signal électrique ou est configuré pour mesurer un signal fourni par le contrôleur 22 à la machine 14 ou un signal fourni par la machine 14 au contrôleur 22. Selon un mode de réalisation, au moins un capteur machine 76 est prévu pour chaque machine 14. Selon un mode de réalisation, au moins deux capteurs machine 76 sont prévus pour chaque machine 14. Les capteurs machine 76 dépendent de la nature de la machine 14 considérée. Chaque capteur machine 76 peut être choisi dans le groupe comprenant un capteur de température, un capteur de pression, un capteur de rotation, un capteur d'effort, un capteur de hauteur de liquide ou un capteur de position. Dans le présent mode de réalisation, chaque capteur machine 76 est relié à l'un des capteurs réseau 74. A titre de variante, les capteurs machine 76 peuvent être reliés directement à l'analyseur 72.

Dans la suite de la description, en considérant un contrôleur 22 et une machine 14 commandée par le contrôleur 22, on appelle :
consignes C les signaux numériques de commande transmis via le réseau de communication 26 vers le contrôleur 22 et destinés à commander le fonctionnement de la machine 14 associée au contrôleur 22 ;
commandes de machine U les signaux numériques ou analogiques de commande fournis par le contrôleur 22 à la machine 14 associée ; et
sorties de machine Y des signaux pouvant être mesurés par des capteurs lors du fonctionnement de la machine 14.

Les consignes C peuvent être lues par les capteurs réseau 74 lors de leur transmission sur le réseau de communication 26. Les commandes de machine U et les sorties de machine Y peuvent être lues par les capteurs machine 76. A titre de variante, pour au moins l'une des machines 14, une sortie de machine Y peut être mesurée par un capteur relié à la machine 14 ou au contrôleur 22 de la machine 14. Le contrôleur 22 peut alors émettre sur le réseau de communication 26 une donnée représentative de la sortie de machine Y qui peut être copiée par un capteur réseau 74. De même, au moins un contrôleur 22 peut émettre sur le réseau de communication 26 une donnée représentative d'une commande de machine U que le contrôleur 22 a fourni à une machine 14 et cette donnée peut être copiée par un capteur réseau 74.

Selon un mode de réalisation, chaque capteur réseau 74 est configuré pour réaliser un prétraitement du flux de données recopié. Le prétraitement peut comprendre la détermination d'une table de valeurs locale stockée dans une mémoire du capteur réseau 74. La table de valeurs peut comprendre des valeurs de consignes C, de commandes de machine U, et/ou de sorties de machine Y déterminées par le capteur réseau 74 à partir d'une analyse du flux de données recopié. Lorsqu'un capteur machine 76 est relié au capteur réseau 74, la table de valeurs locale stockée dans la mémoire du capteur réseau 74 peut en outre comprendre des valeurs de commandes de machine U ou de sorties de machine Y déterminées par le capteur machine 76. Chaque capteur réseau 74 est configuré pour transmettre le flux de données copié à l'analyseur 72 et sa table de valeurs locale.

La figure 6 est un schéma-bloc d'un mode de réalisation de l'analyseur 72. L'analyseur 72 peut comprendre un ou plusieurs processeurs 78 (Processor(s)) et un ou plusieurs supports de stockage non transitoire lisibles par un processeur (par exemple, la mémoire 80 (Memory), notamment choisis dans le groupe comprenant RAM, ROM, EEPROM, mémoire flash ou une autre technologie de mémoire, CD-ROM, disque numérique polyvalent (DVD) ou un autre support à disque optique, cassette magnétique, bande magnétique, disque de stockage magnétique ou un autre dispositif de stockage magnétique, ou un autre support de stockage non transitoire lisible par ordinateur. La mémoire 80 peut stocker des instructions de programme informatique qui, lorsqu'elles sont exécutées, mettent en oeuvre les étapes de procédés décrits par la suite. Le processeur ou les processeurs 78 peuvent être couplés à la mémoire 80 et peuvent exécuter ces instructions de programme d'ordinateur pour entraîner la réalisation de ces étapes. L'analyseur 72 peut en outre comprendre une première interface 82 d'entrée/sortie de réseau (OT Network I/O Interface(s)) par laquelle l'analyseur 72 peut communiquer avec les équipements du réseau OT 16. L'analyseur 72 peut en outre comprendre une ou plusieurs interfaces d'utilisateur 84 (User Interface(s)), par l'intermédiaire desquelles l'analyseur 72 peut fournir un signal de sortie à un utilisateur et recevoir un signal d'entrée provenant de l'utilisateur. Les interfaces d'utilisateur peuvent comprendre des périphériques tels qu'un clavier, une souris, un microphone, un périphérique d'affichage (par exemple un moniteur ou un écran tactile), des haut-parleurs, une caméra, et/ou divers autres types de périphérique entrée/sortie. L'analyseur 72 peut en outre comprendre une ou plusieurs interfaces 86 (Sensor Interface(s)) par lesquelles l'analyseur 72 peut communiquer avec les capteurs réseau 74 et/ou les capteurs machine 76.

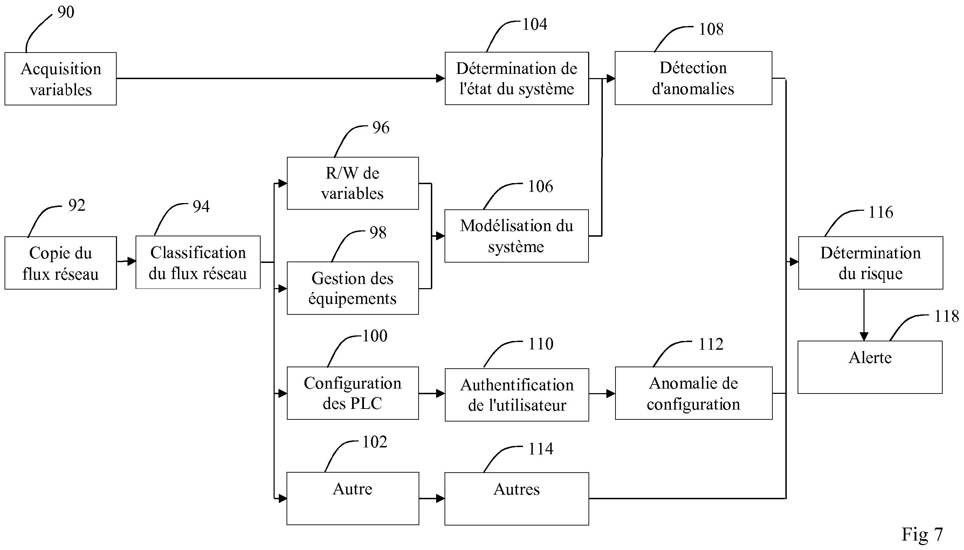

La figure 7 représente, sous la forme d'un schéma-bloc, un mode de réalisation d'un procédé de détection d'intrusion mis en oeuvre par le système industriel 70 de la figure 5.

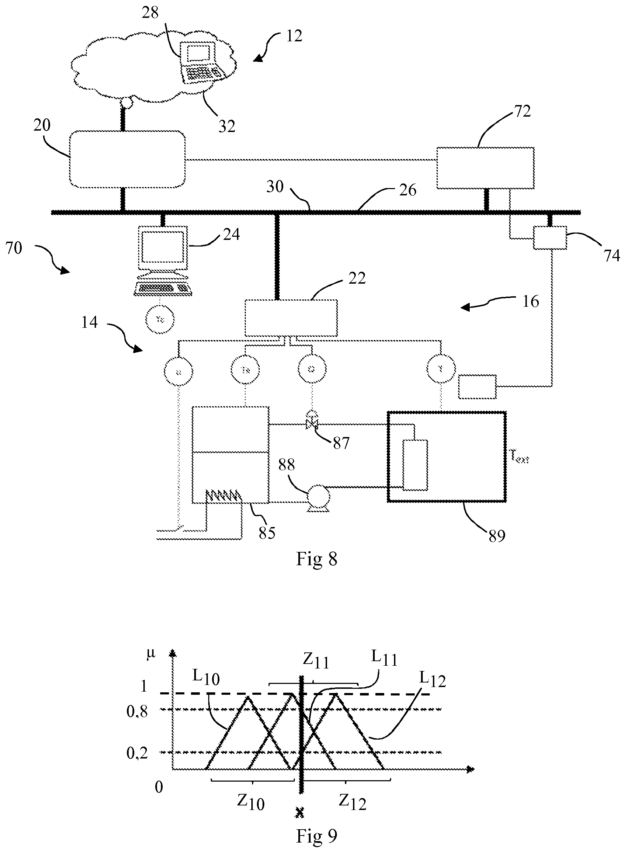

La figure 8 représente un exemple très simplifié du système industriel 70 relié au réseau IT 12 qui va être utilisé à des fins d'illustration pour faciliter la compréhension du présent mode de réalisation de procédé de détection d'intrusion. Dans cet exemple, le système industriel 70 comprend un contrôleur 22, un système informatique 24, un capteur réseau 74 et un capteur machine 76. En outre, les machines 14 commandées par le contrôleur 22 comprennent une chaudière 85, un circuit hydraulique de circulation d'un fluide caloporteur chauffé par la chaudière 85 comprenant une vanne commandable 87 et une pompe 88 et une enceinte 89 chauffée par le fluide caloporteur.

Dans le système industriel 70 selon l'invention, l'analyseur 72 peut collecter des valeurs de variables relatives au fonctionnement des machines 14.

Par exemple, en considérant à nouveau la figure 7, à l'étape 90, une acquisition des valeurs de variables de fonctionnement du système industriel, notamment, pour chaque machine 14 et chaque contrôleur 22, de valeurs de consignes C, de commandes de machine U et de sorties de machine Y, est réalisée par l'analyseur 72. Ceci peut être réalisé par la transmission par chaque capteur réseau 74 de sa table de valeurs locale à l'analyseur 72. Dans l'exemple illustré en figure 8, le système informatique 24 fournit une consigne Tc de température, le contrôleur 22 fournit une commande u à la chaudière 85 et une commande Q à la vanne 87 et les sorties mesurées de la machine 14 correspondent à la température Te de la chaudière 85 et à la température T dans l'enceinte 89.

A l'étape 92, une copie du flux de données transmis sur le réseau de communication 26 du réseau OT 16 est réalisée par chaque capteur réseau 74. Les capteurs réseau 74 peuvent en outre réaliser une inspection des données acquises. Selon un mode de réalisation, les données correspondent à une succession de paquets de données ou de trames de données, appelés données réseau ou flux réseau par la suite, et l'analyse des données réseau comprend la mise en oeuvre d'un procédé d'inspection des paquets en profondeur (en anglais "deep packet inspection"). Les données réseau acquises et inspectées sont transmises par chaque capteur réseau 74 à l'analyseur 72.

A l'étape 94, l'analyseur 72 répartit les données réseau selon l'une des catégories suivantes :
1) données réseau relatives au fonctionnement d'une machine 14 (bloc 96 - R/W de variables) ;
2) données réseau correspondant à la gestion des équipements 22, 24 du réseau OT 16, notamment à la gestion des contrôleurs 22 (bloc 98) ;
3) données réseau relatives à la configuration d'un contrôleur 22 (bloc 100) ; et
4) autres données (bloc 102).

Une donnée réseau de la catégorie 1) correspond notamment à :
une consigne C transmise à l'un des contrôleurs 22 via le réseau de communication 26 du réseau OT 16 et correspondant par exemple à une commande d'écriture d'une données dans une mémoire du contrôleur 22 ;
une commande de machine U transmise par un contrôleur 22 à la machine 14 associée ;
un sortie de machine Y ; ou
une autre donnée relative au fonctionnement des machines 14.

Une donnée réseau de la catégorie 2) correspond notamment à une commande de démarrage d'un contrôleur 22, à une commande d'arrêt d'un contrôleur 22, à un signal d'horloge transmis à un contrôleur 22 ou à une nouvelle valeur de gain d'un contrôleur 22.

Une donnée réseau de la catégorie 3) correspond notamment à la fourniture d'un programme à un contrôleur 22 destiné à être exécuté par le contrôleur 22.

Une donnée réseau de la catégorie 4) correspond à une donnée qui ne fait pas partie des catégories 1), 2) ou 3).

L'étape 94 peut être mise en oeuvre en utilisant une table de transition qui est définie en fonction du protocole de transmission de données utilisé sur le réseau de communication 26 et qui attribue à chaque donnée réseau l'une des catégories précédentes.

A l'étape 104, l'analyseur 72 établit un état du système industriel 70 à partir des données acquises à l'étape 90. Un état du système est déterminé à partir d'un vecteur à N dimensions, où N correspond au nombre de variables varᵢ utilisées, i étant un nombre entier variant de 1 à N, et dont les N composantes correspondent aux valeurs des variables varᵢ utilisées. Selon un mode de réalisation, en plus d'une variable surveillée, la dérivée de cette variable peut en outre être utilisée. La dérivée peut être estimée par différence finie. L'analyseur 72 met à jour les valeurs des variables à partir des valeurs fournies par les capteurs réseau 74. Selon un mode de réalisation, les variables à partir desquelles est déterminé l'état du système comprennent notamment l'ensemble des consignes C des contrôleurs 22, l'ensemble des commandes de machine U fournies à toutes les machines 14 et l'ensemble des sorties de machine Y de toutes les machines 14. Dans l'exemple du système de la figure 8, l'état du système est obtenu à partir du vecteur à 6 dimensions (Tc, u, Q, Te, T, DT) où DT est la dérivée de la température T.

Dans le système industriel 70 selon l'invention, l'analyseur 72 peut déterminer, pour au moins certaines des variables, des plages de valeurs à partir d'au moins un premier modèle de fonctionnement des machines.

Par exemple, selon un mode de réalisation, pour chaque variable varᵢ, l'ensemble des valeurs que peut prendre la variable est divisé en M groupes de valeurs Zᵢⱼ pour une variable symbolique ou en M intervalles de valeurs Zᵢⱼ pour une variable numérique, où M est un nombre entier supérieur ou égal à 1 et j est un nombre entier qui varie de 1 à M. Dans la suite de la description, on parle de groupes Zᵢⱼ indifféremment pour une variable symbolique ou numérique. Les groupes de valeurs Zᵢⱼ peuvent être définis au préalable ou par apprentissage. On appelle cluster Z#j, j variant de 1 à M, comme la concaténation des groupes Zᵢⱼ pour i variant de 1 à N. Dans l'exemple du système de la figure 8, la zone Z#0 peut être la suivante {Z#0 : [18,82 ; 19,22], 0, [12,55 ; 25,10], [12,55 ; 25,10], [12,55 ; 25,10], [-1,24 ; 0,02]}.

Selon un mode de réalisation, pour chaque variable varᵢ, on attribue à la valeur acquise au moins l'un des groupes de valeurs Zᵢⱼ et un degré d'appartenance µᵢᵢ audit groupe. Selon un mode de réalisation, les groupes de valeurs Zᵢᵢ sont distincts. On peut alors attribuer à la variable varᵢ le groupe de valeurs Zᵢⱼ auquel la valeur de la variable varᵢ appartient et le degré d'appartenance µᵢⱼ est égal à 1. Selon un autre mode de réalisation, les groupes de valeurs Zᵢⱼ se recoupent partiellement. On attribue alors à la variable varᵢ les groupes de valeurs Zᵢⱼ auxquels la valeur de la variable varᵢ appartient avec des degrés d'appartenance µᵢⱼ qui sont par exemple déterminés par logique floue.

La figure 9 est un graphe représentant le degré d'appartenance µ en ordonnées et les valeurs d'une variable x en abscisse et illustre un procédé de logique floue. On a représenté à titre d'exemple trois groupes de valeurs Z₁₀, Z₁₁ et Z₁₂ qui se recoupent partiellement. Une loi d'attribution L₁₀, L₁₁ et L₁₂ est prévue pour chaque groupe de valeurs Z₁₀, Z₁₁ et Z₁₂, par exemple une loi affine par morceaux. On attribue alors à la variable les groupes de valeurs auxquels la valeur de la variable appartient avec des degrés d'appartenance qui dépendent des lois d'attribution. A titre d'exemple, en figure 9, pour la variable x, le degré d'appartenant µ₁₁ au groupe Z₁₁ est égal à 0,8 et le degré d'appartenance µ₁₂ au groupe Z₁₂ est égal à 0,2.

De façon générale, une variable varᵢ peut être représentée par une liste des degrés d'appartenance µᵢⱼ où j varie de 1 à M. La variable varᵢ peut alors être représentée de la façon suivante {µᵢ₀, ..., µᵢⱼ, ..., µ_{iM}}, la plupart des degrés d'appartenance étant nuls. Un état du système Z, appelé cluster Z par la suite, peut correspondre à la concaténation des listes de degrés d'appartenance de chaque variable varᵢ, i variant de 1 à N. A l'étape 106, l'analyseur 72 détermine plusieurs modèles du système industriel 70, dont notamment :
un premier modèle M1 du comportement observé des consignes C envoyées par chaque système informatique 24 en fonction de variables d'environnement ;
un deuxième modèle M2 du comportement observé de chaque contrôleur 22 en fonction de variables d'environnement ; et
des modèles de comportement de chaque machine 14, comprenant un troisième modèle M3 du comportement observé et un quatrième modèle M4 de prédiction du comportement de la machine 14.

Ces modèles sont continument mis à jour par des techniques d'apprentissage.

Pour l'utilisation des modèles, on considère que le temps s'écoule de façon discrète, ce qui signifie que la modélisation évolue par pas de temps de durée Te. A titre d'exemple, on note le temps avec un indice discret : l'instant t+1 signifie l'instant t+1*Te.

Les modèles M1, M2 et M3 sont représentés par une table de transition qui permet d'associer à un cluster Z existant à un instant t, noté Z(t), un cluster actif au prochain pas de temps, noté Z(t+1). Plusieurs modèles peuvent être combinés dans une seule table de transition.

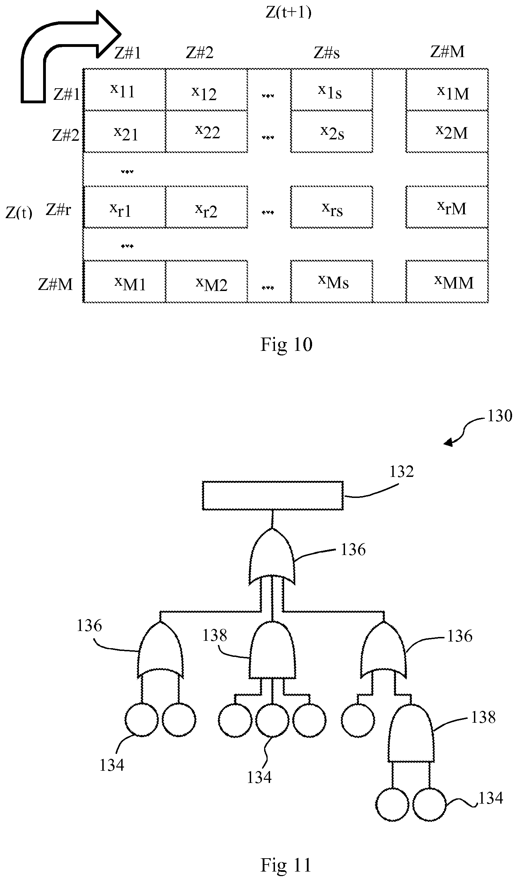

La figure 10 illustre un exemple de table de transition. Selon ce mode de réalisation, chaque case de la table de transition contient :
un nombre entre 0 et 1 représentant le pourcentage de fois où un cluster Zᵣ à t est suivi par un cluster Zₛ à t+1. Ce nombre est noté xᵣₛ ; et
une distribution des temps de transition avec leur pourcentage, ces temps étant supérieurs ou égaux à 0.

Selon un mode de réalisation, un procédé de détermination de la table de transition est le suivant. On utilise un cluster Zprecedent qui est initialement vide. On détermine le cluster Z#p associé aux valeurs des variables utilisées comme cela a été décrit précédemment. Si le cluster Z#p n'existe pas dans la table de transition, il est ajouté à la table de transition et les lignes et colonnes correspondantes de la table de transition sont initialisées à 0. Si le cluster Zpredecent n'est pas vide, on met à jour, dans la table de transition, les fréquences de transition et les temps de transition vers le cluster Z#p. Le cluster Zprecedent est ensuite mis égal au cluster Z#p.

Pour le modèle M1, les variables d'environnement sont, par exemple, l'heure, le jour, le numéro d'utilisateur, le numéro d'ordre de fabrication, le mode de marche (normal, manuel, dégradé, etc.). Dans l'exemple du système de la figure 8, une variable d'environnement peut être l'indicateur jour/nuit. Pour les modèles M2 et M3, les variables d'environnement peuvent être différentes. Dans l'exemple du système de la figure 8, une variable d'environnement pour les modèles M2 et M3 peut être la température extérieure Tₑₓₜ.

Dans l'exemple du système de la figure 8, les modèles M2 et M3 peuvent être combinés dans une seule table de transition. En considérant, à titre d'exemple, les clusters Z#5, Z#6, Z#7 et Z#8 suivants {Z#5 : [18,82 ; 19,22], 1, [12,55 ; 25,10], [37,65 ; 50,20], [12,55 ; 25,10], [-1,24 ; 0,02]}, {Z#6 : [14,90 ; 15,29], 1, [12,55 ; 25,10], [37,65 ; 50,20], [12,55 ; 25,10], [-1,24 ; 0,02]}, {Z#7 : [18,82 ; 19,22], 1, [12,55 ; 25,10], [50,20 ; 62,75], [12,55 ; 25,10], [-1,24 ; 0,02]} et {Z#8 : [18,82 ; 19,22], 1, [12,55 ; 25,10], [50,20 ; 62,75], [12,55 ; 25,10], [0,02 ; 1,27]}, une partie de la table de transition peut correspondre au tableau 1) ci-dessous :

**Tableau 1) : extrait de table de transition**

| | Z#5 | Z#6 | Z#7 | Z#8 |
|---|---|---|---|---|
| Z#5 | 0,972 T=[0 1,00] | 0,014 T=[0 0] | 0,014 T=[1,00 1,00] | |
| Z#6 | 0,010 T=[0 0] | 0,99 T=[0 1,00] | | |
| Z#7 | | | 0,97 T=[0 1,00] | 0,031 T=[1,00 1,00] |

Cette table de transition signifie par exemple que le cluster Z#5 est suivi par lui-même dans 97,2 % des cas au bout d'un temps de 0 ou 1 unité de temps, est suivi par le cluster Z#6 dans 1,4 % des cas au bout d'un temps de 0 unité de temps et est suivi par le cluster Z#7 dans 1,4 % des cas au bout d'un temps de 0 ou 1 unité de temps.

A partir de la matrice de transition, il est possible de déterminer l'évolution de la valeur d'une variable. Selon un mode de réalisation, la détermination de l'évolution de la valeur d'une variable varⱼ, où j est l'indice de la variable dans le cluster, est réalisée de la façon suivante : la variable varⱼ est représentée par ses degrés d'appartenance µᵢ aux clusters Z#i, i variant de 1 à M, ce qui est noté varj=(Z#i : µᵢ). La prédiction de la nouvelle valeur de la variable, notée var'ⱼ, est représentée par var'ⱼ=(Z#i : µᵢ') avec µ_{i'} qui est initialisé à zéro. Pour tous les clusters Z#i pour lesquels µᵢ est différent de zéro et pour tous les clusters Z#j de destination du cluster Z#i, on lit le coefficient xᵢⱼ et on ajoute µᵢ*xᵢⱼ au coefficient µⱼ'. Dans l'exemple du système de la figure 8 avec le procédé de logique floue illustré en figure 9, pour la variable T, avec l'extrait de la table de transition indiquée précédemment, si on considère un cluster initial {[18,82 ; 19,22]}, on obtient comme valeur prédite {0,020: [14,90 ; 15,29], 0,98: [18,82 ; 19,22]}.

Pour le modèle de prédiction M4, on peut utiliser tout type de procédé d'extrapolation. A titre d'exemple, si on considère h valeurs d'une première variable déjà déterminées aux instants successifs t-h+1, ..., t-1 et t, où h est un nombre entier correspondant à l'horizon passé du procédé d'extrapolation, la valeur prédite d'une seconde variable peut être égale à une somme des valeurs de la première variable aux instants t-h+1, ..., t-1 et t multipliées par des coefficients de pondération et éventuellement de la somme des valeurs de la dérivée de la première variable aux instants t-h+1, ..., t-1 et t multipliées par des coefficients de pondération. Dans l'exemple du système de la figure 8, on peut utiliser deux modèles de prédiction, un modèle de prédiction traduisant l'action du débit Q sur la température T et un modèle de prédiction traduisant l'action de la commande u de la chaudière sur la température de l'eau Te. L'horizon passé du procédé d'extrapolation est par exemple pris égal à 30.

Ces modèles permettent de prédire l'évolution d'une grandeur sur un horizon futur compte tenu des entrées appliquées, hors des évolutions observées. A titre d'exemple, pour faire une prédiction ypred d'une mesure Y sur un horizon futur de longueur L à partir d'une commande U en utilisant la matrice Pred contenant les coefficients de pondération du procédé d'extrapolation, on initialise la prédiction ypred avec la valeur mesurée ymes à l'instant t, on détermine un vecteur Uk égal à [duk(t) ; duk(t-1) ; ... duk (t-h+1) ; uk(t) ; uk(t-1) ; ... ; uk (t-h+1)] avec duk(t) égal à uk(t)-u(k-1) et on répète L fois l'opération consistant à attribuer à la nouvelle valeur prédite, la somme de la dernière valeur prédite et du terme Pred(Uk).

Dans le système industriel 70 selon l'invention, l'analyseur 72 peut détecter au moins une anomalie possédant une vraisemblance, si la valeur d'au moins une variable est en dehors de la plage de valeurs de cette variable.

Par exemple, à l'étape 108, l'analyseur 72 détermine si l'état du système présente au moins une anomalie. Les modèles décrits précédemment permettent, à chaque pas de temps, de détecter un comportement anormal. Dans ce but, il est déterminé une "distance" entre deux clusters. On note wi la composante i d'un cluster. La composante wi est par exemple un nombre entier représentant un identifiant du symbole pour les variables symboliques et un identifiant d'intervalle pour les variables numériques. A titre d'exemple, pour le cluster Z#0 suivant {[18,82 ; 19,22], 0, [12,55 ; 25,10], [12,55 ; 25,10], [12,55 ; 25,10], [-1,24 ; 0,02]}, les valeurs des composantes wi du cluster sont 48, 0, 1, 1, 1 et 3, le nombre 48 correspondant à l'identifiant de l'intervalle [18,82 ; 19,22], le chiffre 1 correspondant à l'identifiant de l'intervalle [12,55 ; 25,10] et le chiffre 3 correspondant à l'identifiant de l'intervalle [-1,24 ; 0,02].

Selon un mode de réalisation, le procédé de détermination de la distance D entre le cluster Z#i et le cluster Z#j comprend l'initialisation de D à 0 et, pour toutes les variables vk du cluster, si vk est symbolique, la mise de dk à 1 si wj (Z#i) est différent de wj (Z#j) et la mise de dk à 0 sinon, et si vk est numérique la mise de dk égal à la valeur absolue de la différence entre wj(Z#i) et wj(Z#j) et la détermination de la nouvelle valeur de D égale au maximum entre la dernière valeur de D déterminée et dk. Un tel procédé permet de déterminer des clusters proches, par exemple à une distance inférieure à un seuil dmax.

Selon un mode de réalisation, le procédé de détection de clusters proches comprend les étapes suivantes :
a) initialiser le cluster Zprecedent à la valeur nulle ;
b) acquisition de données et détermination du cluster Zc comme cela a été décrit précédemment ;
c) rechercher dans la table de transition le cluster Zc. Si le cluster Zc est trouvé, on passe à l'étape d). Si le cluster Zc n'est pas trouvé, on cherche dans la table de transition un cluster proche du cluster Zc à une distance inférieure au seuil dmax. Si un cluster est trouvé, on passe à l'étape d). Si un cluster proche n'est pas trouvé, une alerte rouge est émise, ce qui correspond à une situation non reconnue et le procédé se poursuit à l'étape g). Si le cluster Zprecedent est à la valeur nulle, le procédé se poursuit à l'étape f) ;
d) on cherche si la table de transition contient une transition du cluster Zprecedent vers le cluster Zc. Si ce n'est pas le cas, une alerte orange est émise, ce qui correspond à un comportement non reconnu. Si la table de transition contient effectivement une transition du cluster Zprecedent vers le cluster Zc, le procédé se poursuit à l'étape f) ;
e) on vérifie si le temps de transition est dans l'intervalle [Tmin, Tmax]. Si cela est le cas, le procédé se poursuit à l'étape f). Si le temps de transition est inférieur à Tmin, une alerte jaune est émise correspondant à une dynamique trop rapide. Si le temps de transition est supérieur à Tmax, une alerte jaune est émise correspondant à une dynamique trop lente ;
f) le cluster Zprecedent est mis égal à Zc. Le procédé se poursuit à l'étape b) ; et
g) une prédiction de toutes les mesures pour lesquelles on dispose d'un modèle de prédiction est réalisée.
h) les valeurs obtenues avec la table de transition et les valeurs prédites sont propagées dans le modèle de risque à l'étape 116 décrite plus en détail par la suite. Si un niveau de risque est atteint, une alerte rouge correspondant au niveau de risque atteint est émise à l'étape 118 décrite plus en détail par la suite ;
i) en cas de situation anormale, le cluster Zprecedent est mis égal à Zc et le procédé se poursuit à l'étape b).

Le procédé comprend une phase d'apprentissage qui consiste à utiliser les modèles avec des courbes d'évolution des variables dans le cas d'un comportement normal du système industriel correspondant.

A l'étape 110, l'analyseur 72 détecte si la donnée réseau de catégorie 3) a été émise correctement. Selon un mode de réalisation, la donnée réseau de catégorie 3) peut être émise par un système informatique 24 commandé directement par un utilisateur via une interface homme/machine. Selon un mode de réalisation, il peut alors être demandé une identification de l'utilisateur, par exemple par la demande d'un mot de passe, pour que le système informatique 24, commandé par l'utilisateur, puisse émettre une donnée réseau de catégorie 3). L'analyseur 72 peut alors être relié au système informatique 24 et recevoir un signal indiquant que l'utilisateur a saisi un mot de passe correct. Selon un mode de réalisation, il peut être demandé une double authentification de l'utilisateur, par exemple par la demande d'un mot de passe et par l'introduction d'une clé dans un réceptacle prévu à cet effet sur le système informatique 24. L'analyseur 72 peut alors être relié au système informatique 24 et recevoir un signal de confirmation lorsque la double authentification a été réalisée avec succès.

Selon un autre mode de réalisation, le système informatique 24 peut être commandé à distance par un utilisateur depuis un poste 28 du réseau IT 12. Dans ce cas, comme cela a été décrit précédemment, la passerelle 20 peut mettre en oeuvre une double authentification de l'utilisateur et transmettre à l'analyseur 72 un signal de confirmation lorsque l'authentification a été réalisée avec succès.

A l'étape 112, l'analyseur 72 détermine s'il se produit une anomalie appelée anomalie de configuration. Selon un mode de réalisation, une anomalie de configuration est détectée si une donnée réseau de catégorie 3) est détectée au-delà d'une durée qui suit la réception du signal de confirmation lorsque la simple/double authentification a été réalisée avec succès.

A l'étape 114, pour les données réseau de catégorie 4), des règles de blocage prédéfinies peuvent être appliquées. A titre de variante, l'étape 114 peut ne pas être présente.

A l'étape 116, l'analyseur 72 évalue un niveau de risque en fonction de l'anomalie ou des anomalies déterminées aux étapes 108 et 112.

A l'étape 118, une alerte peut être émise en fonction du niveau de risque déterminée à l'étape 116.

Dans le système industriel 70 selon l'invention, l'analyseur 72 peut détecter, à partir de l'anomalie ou des anomalies détectées aux étapes 108 et 112, au moins un événement indésirable, auquel est attribué un impact possédant une gravité. Par exemple, selon un mode de réalisation, l'analyseur 72 met en oeuvre des procédés utilisant des arbres de défaillance qui ont été définis au préalable. Un arbre de défaillance (aussi appelé arbre de pannes ou arbre de fautes) est une combinaison possibles d'événements qui permettent la réalisation d'un événement indésirable prédéfini.

La figure 11 est une représentation graphique d'un exemple très simplifié d'un arbre de défaillance 130. Le sommet 132 de l'arbre ne comporte que l'événement final dont on cherche à décrire comment il peut se produire. On attribue à cet évènement final 132 un impact dont la gravité est quantifiée. Les lignes de l'arbre 130 présentent la combinaison ou les combinaisons d'événements de base 134 susceptibles de produire l'événement final 132. Les combinaisons sont représentées par des liens logiques, généralement des portes logiques "OU" 136 et des portes logiques "ET" 138. Un exemple d'événement final 132 est l'arrêt d'une machine 14 ou une surchauffe d'une machine 14. Un évènement de base 134 correspond par exemple à la détermination d'une anomalie d'état, d'une anomalie de commande, d'une anomalie de modèle, d'une anomalie de gestion et/ou d'une anomalie de configuration par l'analyseur 72. Un évènement de base 134 peut en outre correspondre à d'autres types d'alertes qui sont reçues par l'analyseur 72, par exemple une alerte indiquant qu'un port d'accès d'un équipement 22, 24 du réseau OT 16 n'est pas bloqué ou que le pare-feu de l'un des systèmes informatiques 24 est mal configuré.

Dans le système industriel 70 selon l'invention, l'analyseur 72 peut déterminer, pour chaque impact attribué à chacun des au moins un événement indésirable, une vraisemblance, à partir d'une combinaison de vraisemblances des anomalies déterminées par l'analyseur 72.

Par exemple, l'aanalyseur 72 détermine, pour chaque impact, la vraisemblance de l'impact à partir d'une combinaison des vraisemblances des anomalies déterminées par l'analyseur 72 et des vraisemblances des alertes reçues par l'analyseur 72. La vraisemblance de l'impact est un nombre variant de 0 à 1. En combinant cette vraisemblance à la gravité de l'impact, déterminée lors de l'analyse de risque, l'analyseur 72 fournit une indication du niveau de risque, par exemple en utilisant une matrice de risque.

Dans le système industriel 70 selon l'invention, l'analyseur 72 peut fournir, pour chaque impact et son couple gravité-vraisemblance, une valeur numérique. Aussi, l'analyseur 72 peut déterminer un niveau de risque global du système industriel à partir des valeurs numériques obtenues des impacts des au moins un événement indésirable détecté.

Par exemple, une matrice de risque peut être utilisée comme indiqué ci-dessus. La matrice de risque est une matrice dont les lignes sont ordonnées selon la vraisemblance d'apparition, c'est-à-dire la probabilité d'apparition, de l'impact, par exemple du plus probable au moins probable, et dont les colonnes sont ordonnées selon la gravité pondérée de l'impact et qui fournit une valeur numérique pour chaque couple gravité-vraisemblance. Le niveau de risque global est déterminé à partir des valeurs numériques obtenues des impacts détectés, par exemple en déterminant le maximum ou la moyenne des valeurs numériques.

Un exemple de matrice de risque correspond au tableau 2) suivant.

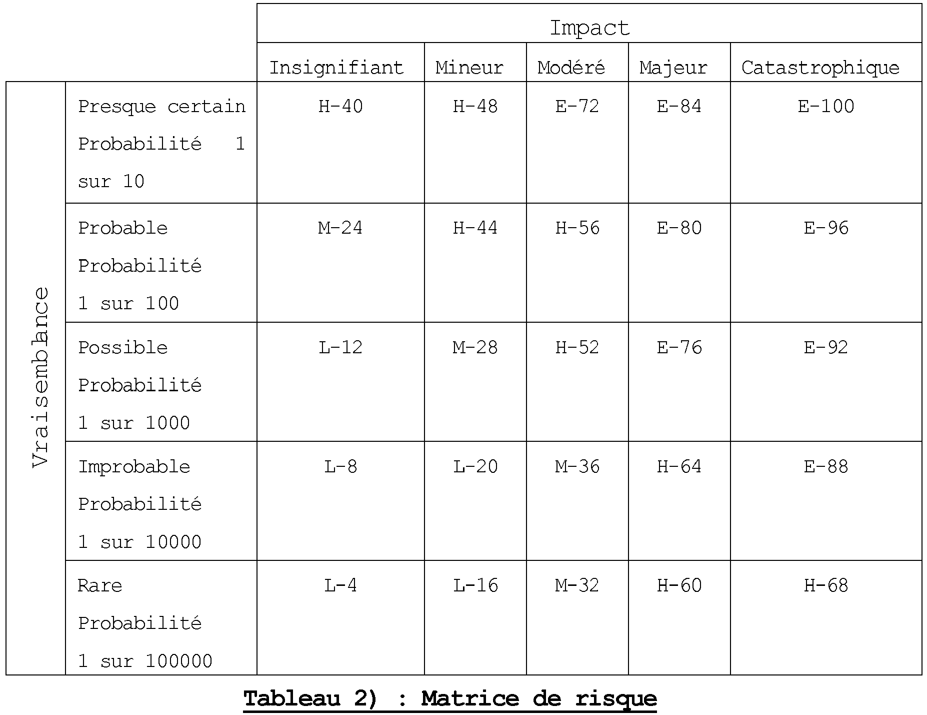

Dans le tableau 2), les lettres E, H, M et L ont la signification suivante. La lettre E signifie un risque extrême, correspondant à une valeur numérique comprise entre 70 et 100, qui requiert par exemple une réaction immédiate. La lettre H signifie un risque élevé, correspondant à une valeur numérique comprise entre 40 et 70, qui requiert par exemple une réaction prioritaire. La lettre M signifie un risque modéré, correspondant à une valeur numérique comprise entre 21 et 39, qui requiert par exemple une réaction planifiée. La lettre L signifie un risque faible, correspondant à une valeur numérique comprise entre 0 et 20, qui requiert par exemple une réaction prévue dans les procédures de routine.

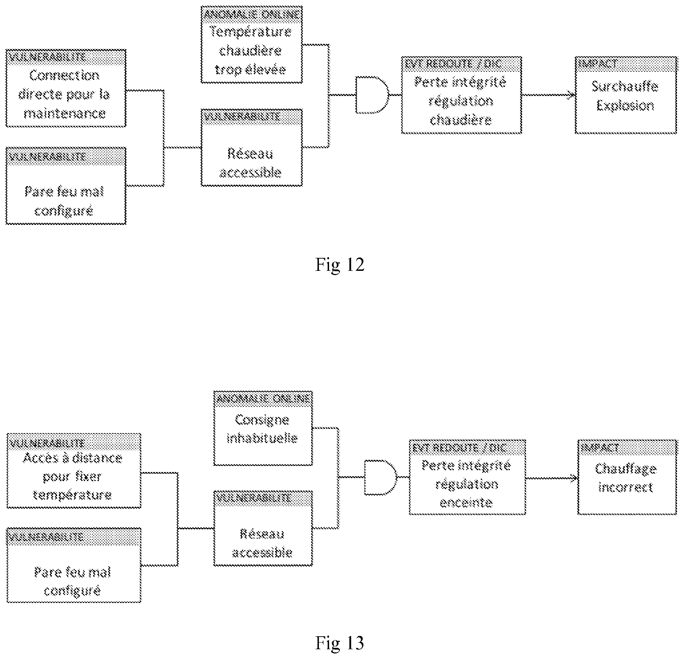

La figure 12 illustre un premier exemple d'arbre de défaillance pour le système de la figure 8 correspondant à une surchauffe de la chaudière 85. La gravité de l'impact est dans ce cas catastrophique.

La figure 13 illustre un deuxième exemple d'arbre de défaillance pour le système de la figure 8 correspondant à chauffage incorrecte de l'enceinte 89. La gravité de l'impact est dans ce cas modérée.

L'analyse de risque permet la détermination de conditions à respecter pour certaines variables du système industriel. Pour le système de la figure 8, une condition peut être que la température Te doit rester inférieure à 90 °C pour garantir un fonctionnement en toute sécurité. Une autre condition peut être que la température T doit rester comprise entre 15 °C et 30 °C pour garantir un fonctionnement de qualité correcte.

Pour le système de la figure 8, des exemples d'attaques sont les suivants :
des attaques réseau sur la consigne Tc consistant, par exemple, à mettre la consigne Tc à une valeur plus élevée qu'en fonctionnement normal ou mettre la consigne Tc à zéro ;
des attaques sur les commandes u et Q consistant, par exemple, à mettre la commande u à zéro, à utiliser une valeur de façon inhabituelle, à mettre le débit Q au maximum pour tenter de dégrader le système industriel, ou à mettre la commande de chauffage u au maximum pour tenter de dégrader le système industriel ;
des attaques sur les mesures Te et T consistant, par exemple, à fausser la mesure de température de l'eau Te pour dégrader le système industriel, la température Te étant par exemple maintenue fixe à 79 °C dès qu'elle dépasse 79 °C ou à fausser la mesure de température T pour dégrader le système industriel, la température T étant par exemple maintenue fixe à 16 °C dès qu'elle dépasse 18 °C ;
des attaques contre le contrôleur 22, consistant par exemple à l'empêcher de transmettre des commandes ; et
des attaques de dérive du système industriel, consistant par exemple à diminuer la température extérieure Text, ou à réduire l'efficacité de chauffage de la chaudière.

En considérant à nouveau la figure 7, à l'étape 118, l'analyseur 72 effectue une action en fonction du niveau de risque déterminé à l'étape 116. Selon un mode de réalisation, l'analyseur 72 émet un message, par exemple par l'intermédiaire de l'interface homme/machine 84, indiquant le niveau de risque déterminé. Selon un autre mode de réalisation, l'analyseur 72 peut commander l'arrêt d'une machine 14.

Selon un mode de réalisation, la passerelle 20 est configurée pour réaliser un classement des données réseau de la même façon que ce qui a été décrit à l'étape 94. La passerelle 20 peut déterminer par apprentissage un modèle statistique à partir de la succession des données réseau ou à partir des ordres de lecture ou d'écriture de données dans la mémoire 36, par exemple sous forme d'une table de transition comme cela a été décrit précédemment, les entrées des lignes et colonnes étant les données réseau, la table de transition étant construite comme cela a été décrit précédemment. Selon un mode de réalisation, l'apprentissage comprend la détermination d'un modèle de prédiction permettant de prédire la séquence attendue de données réseau ou d'ordres de lecture ou d'écriture de données dans la mémoire 36 comme cela a été décrit précédemment.

La passerelle 20 peut émettre une alerte si l'écart entre l'instant de détection de la dernière donnée réseau ou d'un ordre de lecture ou d'écriture dans la mémoire 36 et l'instant prévu par le modèle est supérieur à un seuil donné.

Des modes de réalisation particuliers ont été décrits. Diverses variantes et modifications apparaîtront à l'homme de l'art. En particulier, bien que dans le mode de réalisation décrit précédemment en relation avec la figure 5, l'analyseur 72 est un élément distinct de la passerelle 20, l'analyseur 72 peut être confondu avec la passerelle 20. En outre, divers modes de réalisation avec diverses variantes ont été décrits ci-dessus. On note que divers éléments de ces divers modes de réalisation et variantes peuvent être combinés. En outre, bien que dans les modes de réalisation décrits précédemment, le procédé d'apprentissage du comportement du système industriel ait été décrit dans le cas d'un procédé de détection d'intrusion dans un système industriel, il est clair qu'un tel procédé d'apprentissage peut être mis en oeuvre pour d'autres applications que la détection d'intrusion dans un système industriel. Selon un exemple, le modèle d'apprentissage peut être utilisé pour prédire la consommation d'énergie d'un système. Si l'algorithme est utilisé en parallèle sur plusieurs procédés, il peut permettre une optimisation de la séquence de fonctionnement des différents procédés pour lisser et optimiser la consommation énergétique. Selon un autre exemple, si le modèle présenté est utilisé pour un procédé de pilotage du chauffage d'un bâtiment, il peut permettre, en outre, à un procédé de prédire l'occupation du bâtiment à partir du modèle de consommation appris.

## Revendications

1. Système industriel comprenant des machines (14), des systèmes (22) de commande des machines reliés par un premier réseau de communication (26) et une passerelle (20) destinée à relier le premier réseau de communication (26) à un deuxième réseau de communication (30), la passerelle (20) comprenant une mémoire (36) et comprenant un processeur (34) configuré pour copier dans la mémoire des premières données transmises sur le deuxième réseau de communication et relatives au fonctionnement des machines, comprenant en outre un analyseur (72), configuré pour :
- collecter des valeurs de variables relatives au fonctionnement des machines (14),
- déterminer, pour au moins certaines des variables, des plages de valeurs à partir d'au moins un premier modèle de fonctionnement des machines,
- détecter au moins une anomalie, si la valeur d'au moins une variable est en dehors de la plage de valeurs de ladite variable, ladite anomalie possédant une vraisemblance,
- détecter, à partir de la au moins une anomalie, au moins un événement indésirable, auquel est attribué un impact sur le système industriel, ledit impact possédant une gravité,
- déterminer, pour chaque impact attribué à chacun des au moins un événement indésirable, une vraisemblance, à partir d'une combinaison de vraisemblances de la au moins une anomalie détectée,
- fournir, pour chaque impact et son couple gravité-vraisemblance, une valeur numérique,
- déterminer un niveau de risque global du système industriel à partir des valeurs numériques obtenues des impacts des au moins un événement indésirable détecté.

2. Système industriel selon la revendication 1, dans lequel les premières données sont fournies par les systèmes de commande (22).

3. Système industriel selon la revendication 1 ou 2, dans lequel le processeur (34) est configuré pour écrire dans la mémoire (36) des deuxièmes données fournies par un poste (28) relié au deuxième réseau de communication (30).

4. Système industriel selon la revendication 3, dans lequel le processeur (34) est configuré pour transmettre à au moins l'un des systèmes de commande (22) les deuxièmes données écrites dans la mémoire (36).

5. Système industriel selon la revendication 3 ou 4, dans lequel le processeur (34) est configuré pour réaliser une authentification d'un utilisateur dudit poste (28) mettant en oeuvre deux procédés d'identification distincts.

6. Système industriel selon l'une des revendications 1 à 5, comprenant au moins un capteur réseau (74) configuré pour faire une recopie de troisièmes données circulant sur le premier réseau de communication (26) et relié à l'analyseur.

7. Système industriel selon la revendication 6, dans lequel l'analyseur (72) est configuré pour recevoir les troisièmes données, pour classer les troisièmes données selon au moins des première et deuxième catégories, et pour déterminer au moins le premier modèle à partir des troisièmes données de la première catégorie et un deuxième modèle à partir des troisièmes données de la deuxième catégorie.

## Patentansprüche

1. Industriesystem, umfassend Maschinen (14), Maschinensteuersysteme (22), die durch ein erstes Kommunikationsnetzwerk (26) verbunden sind, und ein Gateway (20), das dazu vorgesehen ist, das erste Kommunikationsnetzwerk (26) mit einem zweiten Kommunikationsnetzwerk (30) zu verbinden, wobei das Gateway (20) einen Speicher (36) umfasst und einen Prozessor (34) umfasst, der zum Kopieren von ersten Daten, die auf dem zweiten Kommunikationsnetzwerk übertragen werden und sich auf den Betrieb der Maschinen beziehen, in den Speicher konfiguriert ist, weiterhin umfassend einen Analysator (72), der konfiguriert ist zum:
- Sammeln von Werten von Variablen in Bezug auf den Betrieb der Maschinen (14),
- Bestimmen von Wertebereichen für mindestens einige der Variablen aus mindestens einem ersten Betriebsmodell der Maschinen,
- Erfassen von mindestens einer Anomalie, wenn der Wert von mindestens einer Variable außerhalb des Wertebereichs der Variable liegt, wobei die Anomalie eine Wahrscheinlichkeit aufweist,
- Erfassen von mindestens einem unerwünschten Ereignis, dem eine Auswirkung auf das Industriesystem zugeschrieben wird, aus der mindestens einen Anomalie, wobei die Auswirkung über eine Schwere verfügt,
- Bestimmen einer Wahrscheinlichkeit für jede Auswirkung, die jedem des mindestens einen unerwünschten Ereignisses zugeschrieben wird, aus einer Kombination der Wahrscheinlichkeiten der mindestens einen erfassten Anomalie,
- Bereitstellen eines numerischen Werts für jede Auswirkung und ihr Schwere-Wahrscheinlichkeitspaar,
- Bestimmen eines Gesamtrisikoniveaus des Industriesystems aus den erhaltenen numerischen Werten der Auswirkungen des mindestens einen erfassten unerwünschten Ereignisses.

2. Industriesystem nach Anspruch 1, wobei die ersten Daten von den Steuersystemen (22) bereitgestellt werden.

3. Industriesystem nach Anspruch 1 oder 2, wobei der Prozessor (34) zum Schreiben von zweiten Daten, die von einer Station (28) bereitgestellt werden, die mit dem zweiten Kommunikationsnetzwerk (30) verbunden ist, in den Speicher (36) konfiguriert ist.

4. Industriesystem nach Anspruch 3, wobei der Prozessor (34) zum Übertragen der zweiten Daten, die in den Speicher (36) geschrieben werden, an mindestens eines der Steuersysteme (22) konfiguriert ist.

5. Industriesystem nach Anspruch 3 oder 4, wobei der Prozessor (34) zum Ausführen einer Authentifizierung eines Benutzers der Station (28) konfiguriert ist, wobei zwei verschiedene Identifizierungsverfahren umgesetzt werden.

6. Industriesystem nach einem der Ansprüche 1 bis 5, umfassend mindestens einen Netzwerksensor (74), der zum Erstellen einer Kopie von dritten Daten, die auf dem ersten Kommunikationsnetzwerk (26) zirkulieren, konfiguriert ist und mit dem Analysator verbunden ist.

7. Industriesystem nach Anspruch 6, wobei der Analysator (72) zum Empfangen der dritten Daten, zum Einstufen der dritten Daten gemäß mindestens einer ersten und einer zweiten Kategorie und zum Bestimmen von mindestens dem ersten Modell aus dritten Daten der ersten Kategorie und einem zweiten Modell aus dritten Daten der zweiten Kategorie konfiguriert ist.

## Claims

1. Industrial system comprising machines (14), systems (22) for controlling machines connected by a first communication network (26) and a gateway (20) intended to connect the first communication network (26) to a second communication network (30), the gateway (20) comprising a memory (36) and comprising a processor (34) configured to copy to the memory first data transmitted over the second communication network and relating to the operation of the machines, further comprising an analyzer (72), configured to:
- collect values of variables relating to the operation of the machines (14),
- determine, for at least some of the variables, ranges of values from at least one first operational model of the machines,
- detect at least one anomaly, if the value of at least one variable is outside of the range of values of said variable, said anomaly having a likelihood,
- detect, from the at least one anomaly, at least one undesirable event, to which is allocated an impact on the industrial system, said impact having a severity,
- determine, for each impact allocated to each of the at least one undesirable event, a likelihood, from a combination of likelihoods of the at least one anomaly detected,
- provide, for each impact and the severity-likelihood combination thereof, a numerical value,
- determine an overall risk level of the industrial system from the numerical values obtained of the impacts of the at least one undesirable event detected.

2. Industrial system according to claim 1, wherein the first data are provided by the control systems (22).

3. Industrial system according to claim 1 or 2, wherein the processor (34) is configured to write in the memory (36) second data provided by a station (28) connected to the second communication network (30).

4. Industrial system according to claim 3, wherein the processor (34) is configured to transmit to at least one of the control systems (22) the second data written in the memory (36).

5. Industrial system according to claim 3 or 4, wherein the processor (34) is configured to perform an authentication of a user of said station (28) implementing two distinct identification methods.

6. Industrial system according to one of claims 1 to 5, comprising at least one network sensor (74) configured to make a copy of third data circulating over the first communication network (26) and connected to the analyzer.

7. Industrial system according to claim 6, wherein the analyzer (72) is configured to receive the third data, in order to classify the third data according to at least first and second categories, and in order to determine at least the first model from the third data of the first category and a second model from the third data of the second category.
